# EUROPÄISCHE PATENTSCHRIFT

(11) **EP 4 071 213 B1**
(45) Veröffentlichungstag und Bekanntmachung des Hinweises auf die Patenterteilung: **17.12.2025**
(21) Anmeldenummer: 21167003.9
(22) Anmeldetag: 06.04.2021
(51) Int. Cl.: C08L 51/00, C08F 265/04

(54) **WEICHMACHERFREIE FLEXIBLE FORMMASSEN AUF BASIS VON VINYLCHLORID-PFROPFCOPOLYMEREN**
PLASTICIZER-FREE FLEXIBLE MOULDING MATERIALS BASED ON VINYL CHLORIDE GRAFT COPOLYMERS
MATIÈRES DE MOULAGE SOUPLES SANS PLASTIFICATEUR À BASE DE COPOLYMÈRES GREFFÉS DE CHLORURE DE VINYLE

(43) Veröffentlichungstag der Anmeldung: 12.10.2022
(73) Patentinhaber: Westlake Vinnolit GmbH & Co. KG, 85737 Ismaning (DE)
(72) Erfinder: ARNOLDI, Eric, 51375 Leverkusen (DE); HABERL, Georg, 85737 Ismaning (DE)
(74) Vertreter: Forstmeyer, Dietmar

(56) Entgegenhaltungen:
- WO-A1-2014/121851
- DE-A1- 19 610 077
- US-A- 4 752 639

## Beschreibung

Die vorliegende Erfindung betrifft weichmacherfreie flexible Formmassen, die ein Vinylchlorid-Pfropfcopolymer und ein Ethylen-Vinylacetat-Copolymer mit einem Vinylacetat-Anteil von mindestens 38 Gew.-%. enthalten.

Vinylchlorid-Pfropfcopolymere mit einem Gehalt von 50 % Polybutylacrylat und 50 % PVC wie sie z.B. in der EP 0 647 663 A1 beschrieben sind, können mit unterschiedlichen Verfahren thermoplastisch verarbeitet werden. Durch die Pfropfung wird eine optimale Verteilung der weichen, teilvernetzten Polyacrylat (PAE) - Phase in der PVC-Matrix erzielt und Schwierigkeiten bei der Homogenisierung, die sonst bei Hart/Weich-Blends oftmals auftreten, vermieden. Ohne Zugabe von Weichmachern können Formmassen mit einer Shore-Härte von ca. A 90 hergestellt werden.

Ausgehend von diesen halbharten Massen war es die Aufgabe, weichere Formulierungen zu ermöglichen, ohne die Vorteile der Migrationsfreiheit zu verlieren. Durch die Verwendung von weichen Polymeren ist im Gegensatz zu Monomer- bzw. Polymerweichmachern Migration ausgeschlossen. Abmischungen von Vinylchlorid - Pfropfcopolymeren mit anderen weichmachenden Polymeren sind z.B. in der DE 35 42 694 A1 beschrieben.

Es wurde überraschenderweise gefunden, dass acetatreiches Ethyl-Vinylacetat-Copolymer (EVA) in dem mehrphasigen Pfropfcopolymer als Verträglichkeitsmacher zwischen der Acrylat- und der PVC-Phase fungiert. Dies ist überraschend, da das Acrylat teilvernetzt ist (Funktion als Schlagzähmodifizierer) und dadurch nur bedingt eine Phase mit PVC ausbilden kann. Es hat sich gezeigt, dass durch die Phasenvermittlung des verwendeten acetatreichen EVAs sehr weiche Formmassen mit nur einem TG und einem nicht zu erwartenden Eigenschaftsprofil hergestellt werden können. Keines der in der DE 35 42 694 A1 beschriebenen Polymere erreicht auch nur annähernd die weichmachende Wirkung von Ethylen-Vinylacetat-Copolymeren mit einem Vinylacetat-Anteil von mindestens 38 Gew.-%.

Gegenstand der Erfindung sind Zusammensetzungen (insbesondere Formmassen), welche die folgenden Komponenten (I) und (II) enthalten:
(I) ein Vinylchlorid-Pfropfcopolymer, wie es z.B. in der EP 0 647 663 A1 beschrieben ist; und
(II) ein Ethylen-Vinylacetat-Copolymer mit einem Vinylacetat-Anteil von mindestens 38 Gew.-%.

Auf die in der EP 0 647 663 A1 offenbarten Vinylchlorid-Pfropfcopolymere und auf deren Herstellung wird hierin ausdrücklich Bezug genommen.

Die vorliegende Erfindung betrifft Zusammensetzungen (insbesondere Formmassen), welche die folgenden Komponenten (I) und (II) enthalten:
(I) ein Vinylchlorid-Pfropfcopolymer enthaltend:
   A) 35 bis 60 Gew.-%, bezogen auf das Gesamtgewicht des Vinylchlorid-Pfropfcopolymers, eines aufgepfropften, vernetzten Copolymers, herstellbar durch Copolymerisation von:
      80 bis 99.95 Gew.-% Vinylchlorid,
      0.05 bis 3.0 Gew.-% mehrfach ethylenisch ungesättigten Comonomeren sowie
      0 bis 19.95 Gew.-% weiteren copolymerisierbaren, ethylenisch ungesättigten Comonomeren,
      oder
      35 bis 60 Gew.-%, bezogen auf das Gesamtgewicht des Vinylchlorid-Pfropfcopolymers, eines aufgepfropften (Co)polymers, herstellbar durch (Co)polymerisation von
      80 bis 100 Gew.-% Vinylchlorid sowie
      0 bis 20 Gew.-% weiteren copolymerisierbaren, ethylenisch ungesättigten Comonomeren, bei einer Polymerisationstemperatur von 30 bis 85°C,
      und
   B) 40 bis 65 Gew.-%, bezogen auf das Gesamtgewicht des Vinylchlorid-Propfcopolymers, einer vernetzten Pfropfgrundlage enthaltend
      ein vernetztes Acrylsäureester-Copolymer mit 0.01 bis 5 Gew.-% mehrfach ethylenisch ungesättigten Comonomer-Einheiten sowie gegebenenfalls weiteren mit Acrylsäureestern copolymerisierbaren Comonomer-Einheiten; und
(II) ein Ethylen-Vinylacetat-Copolymer mit einem Vinylacetat-Anteil von 38 bis 92 Gew.-%.

### Komponente (I):

Vorzugsweise enthält das Vinylchlorid-Pfropfcopolymer (Komponente (I)) 40 bis 55 Gew.-% des aufgepfropften, vernetzten Copolymers A) oder des aufgepfropften, unvernetzten (Co)polymers A) und 45 bis 60 Gew.-% der vernetzten Pfropfgrundlage B).

Zur Vernetzung des aufgepfropften Vinylchlorid-Copolymers A) geeignete, mehrfach ethylenisch ungesättigte Comonomere sind solche, welche keine konjugierten Doppelbindungen aufweisen, beispielsweise Divinylester von Dicarbonsäuren wie Divinyladipat; Diallylester von Polycarbonsäuren wie Diallylphthalat, Diallylfumarat; Divinylether von mehrwertigen Alkoholen wie Ethylenglykoldivinylether; Divinylaromaten wie Divinylbenzol; Allyl- und Methallylester von ethylenisch ungesättigten Monocarbonsäuren wie Allylmethacrylat; Di- und Triacrylate von mehrwertigen Alkoholen wie Ethylenglykoldimethacrylat, Propylenglykoldimethacrylat, Diethylenglykoldiacrylat (DEGDA), Diethylenglykoldimethacrylat (DEGDMA), Trimethylenglykoldiacrylat, Butylenglykoldiacrylat, Pentamethylenglykoldiacrylat, Glyceryltriacrylat, Trimethylolpropantriacrylat (TMPTA), Trimethyolpropantrimethacrylat (TMPTMA); Tetraacrylate mehrwertiger Alkohole wie Pentaerythrittetraacrylat und Triallylcyanurat.

Bevorzugt werden Diallylphthalat, Divinyladipat, Triallylcyanurat, Allylmethacrylat, Ethylenglykoldimethacrylat, Butylenglykoldiacrylat, Trimethylenglykoldiacrylat und Trimethyolpropantriacrylat oder deren Gemische. Vorzugsweise beträgt die Menge an copolymerisiertem Vernetzer 0,1 bis 1,5 Gew.-%, bezogen auf das Gesamtgewicht des aufgepfropften Copolymers A).

Neben Vinylchlorid und gegebenenfalls mehrfach ethylenisch ungesättigten Comonomeren kann das aufgepfropfte Copolymer A) noch ein oder mehrere weitere copolymerisierte, ethylenisch ungesättigte Comonomere enthalten. Beispiele hierfür sind Vinylester von gesättigten Carbonsäuren mit 2 bis 12 C-Atomen wie Vinylacetat, Vinylpropionat, Vinyllaurat oder Versaticsäurevinylester; (Meth)acrylsäureester von Alkoholen mit 1 bis 8 C-Atomen, wie Methylacrylat, Methylmethacrylat, n-Butylacrylat, n-Butylmethacrylat, t-Butylacrylat, 2-Ethylhexylacrylat; Glycidylmethacrylat, ethylenisch ungesättigte Mono- und Dicarbonsäuren wie Acrylsäure, Methacrylsäure, Maleinsäure, Fumarsäure; Mono- und Diester von ethylenisch ungesättigten Dicarbonsäuren wie Diisopropylfumarat; Vinylaromaten wie Styrol; sowie Olefine wie Ethylen.

Die bei der vorliegenden Erfindung verwendete Pfropfgrundlage enthält ein vernetztes Acrylsäureester-Copolymer mit 0.01 bis 5 Gew.-% mehrfach ethylenisch ungesättigten Comonomer-Einheiten sowie gegebenenfalls weiteren copolymerisierbaren Comonomer-Einheiten oder Gemische solcher Copolymere.

Geeignete Acrylsäureester-Copolymere sind solche aus einem oder mehreren Acrylsäureestern von Alkoholen mit 1 bis 12 C-Atomen, wie beispielsweise Methylacrylat, Ethylacrylat, Propylacrylat, n-Butylacrylat, 2-Ethylhexylacrylat.

Der Ausdruck "mehrfach ethylenisch ungesättigte Comonomer-Einheiten" bezieht sich vorzugsweise auf Struktureinheiten, die durch Umsetzung von den entsprechenden mehrfach ethylenisch ungesättigten Comonomeren erhalten werden. Der Ausdruck "mit Acrylsäureestern copolymerisierbare Comonomer-Einheiten" bezieht sich vorzugsweise auf Struktureinheiten, die durch Umsetzung von den entsprechenden mit Acrylsäureestern copolymerisierbaren Comonomeren erhalten werden.

Geeignete, mehrfach ethylenisch ungesättigte Comonomer-Einheiten können auf den bereits weiter oben genannten Comonomeren basieren bzw. aus diesen hergestellt werden. Vorzugsweise enthält die vernetzte Acrylat-Pfropfgrundlage 0.05 bis 0.5 Gew%, bezogen auf das Gesamtgewicht der Pfropfgrundlage, copolymerisiertes Diallylphthalat, Divinyladipat, Triallylcyanurat, Allylmethacrylat, Ethylenglykoldimethacrylat, Butylenglykoldiacrylat, Trimethylenglykoldiacrylat, Trimethyolpropantriacrylat oder deren Gemische.

Beispiele für weitere copolymerisierbare, ethylenisch ungesättigte Comonomere sind Vinylester von gesättigten Carbonsäuren mit 2 bis 12 C-Atomen wie Vinylacetat, Vinylpropionat, Vinyllaurat oder Versaticsäurevinylester; Methacrylsäureester von Alkoholen mit 1 bis 8 C-Atomen, wie Methylmethacrylat, n-Butylmethacrylat; ethylenisch ungesättigte Mono- und Dicarbonsäuren wie Acrylsäure, Methacrylsäure, Maleinsäure, Fumarsäure; Mono- und Diester von ethylenisch ungesättigten Dicarbonsäuren wie Diisopropylfumarat; Vinylaromaten wie Styrol; Olefine wie Ethylen; Sulfonate wie Vinylsulfonat, 2-Acrylamido-2-methylpropansulfonat.

Bevorzugt sind vernetzte Acrylsäureester-Copolymere aus n-Butylacrylat und/oder 2-Ethylhexylacrylat. Als Pfropfgrundlage B) bevorzugt sind auch vernetzte Acrylsäurester-Ethylen-Vinylester-Copolymere mit einem Acrylsäureester-Gehalt von 35 bis 70 Gew.-%, einem Ethylen-Gehalt von 10 bis 30 Gew.-% und Vinylester-Gehalt von 20 bis 50 Gew.-%, bezogen auf das Gesamtgewicht des Copolymers B), insbesondere vernetzte Copolymere enthaltend n-Butylacrylat-, Ethylen- und Vinylacetat-Einheiten. Gegebenenfalls können auch Gemische der genannten Acrylsäureester-Copolymere enthalten sein.

Besonders bevorzugt werden gemäß der vorliegenden Erfindung Vinylchlorid-Pfropfcopolymere als Komponente (I) verwendet, enthaltend:
A) 40 bis 55 Gew.-%, bezogen auf das Gesamtgewicht des Pfropfcopolymers, eines aufgepfropften, vernetzten Copolymers aus
   98.5 bis 99.9 Gew.-% Vinylchlorid sowie
   0.1 bis 1.5 Gew.-% eines oder mehrerer mehrfach ethylenisch ungesättigter Comonomere aus der Gruppe Diallylphthalat, Allylmethacrylat, Ethylenglykoldimethacrylat, Butylenglykoldiacrylat, Trimethylenglykoldiacrylat, Trimethyolpropantriacrylat,
      oder
   40 bis 55 Gew.-%, bezogen auf das Gesamtgewicht des Vinylchlorid-Pfropfcopolymers, eines aufgepfropften VC-Polymers, herstellbar durch Pfropfpolymerisation von Vinylchlorid bei einer Polymerisationstemperatur von 30 bis 85°C, und
B) 45 bis 60 Gew.-%, bezogen auf das Gesamtgewicht des Pfropfcopolymers, einer vernetzten Pfropfgrundlage bestehend aus einem vernetzten Copolymer von n-Butylacrylat und/oder 2-Ethylhexylacrylat, oder aus einem vernetzten Acrylsäureester-Ethylen-Vinylacetat-Copolymer mit einem Acrylat-Gehalt von 35 bis 70 Gew.-% oder Gemischen der genannten Copolymere, wobei die Copolymere mit 0.05 bis 0.5 Gew.-% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind.

Die Herstellung der als Komponente (I) zu verwendenden Vinylchlorid-Pfropfcopolymere ist in der EP 0 647 663 A1 ausführlich beschrieben.

### Komponente (II):

Bei der Komponente (II) handelt es sich um ein Ethylen-Vinylacetat-Copolymer mit einem Vinylacetat-Gehalt von mindestens 38 Gew.-%. Die als Komponente (II) eingesetzten Ethylen-Vinylacetat-Copolymere weisen bevorzugt einen Vinylacetat-Gehalt von 38 bis 92 Gew.-%, besonders bevorzugt von 43 bis 75 Gew.-%; insbesondere bevorzugt von 48 bis 72 Gew.-% auf. Dabei bezieht sich die Angabe des Vinylacetat-Gehalts in der vorliegenden Anmeldung immer auf die Gesamtmenge aus Ethylen-Einheiten und Vinylacetat-Einheiten in dem Ethylen-Vinylacetat-Copolymer, die 100 Gew.-% beträgt.

Geeignete Herstellungsverfahren für die als Komponente (II) eingesetzten Ethylen-Vinylacetat-Copolymere sind z. B. in EP 0 341 499 A2, EP 0 510 478 A1, DE 37 31 054 A1 und DE 38 25 450 A1 genannt.

Als Komponente (II) geeignete Ethylen-Vinylacetat-Copolymere sind z. B. unter dem Handelsnamen Levamelt^{®} der Firma ARLANXEO kommerziell erhältlich. Dabei handelt es sich bevorzugt um Ethylen-Vinylacetat-Copolymere wie Levamelt^{®} 400, Levamelt^{®} 450, Levamelt^{®} 452, Levamelt^{®} 456, Levamelt^{®} 500, Levamelt^{®} 600, Levamelt^{®} 686, Levamelt^{®} 700, Levamelt^{®} 800 oder Levamelt^{®} 900.

Die erfindungsgemäßen Zusammensetzungen enthalten Komponente (I) und Komponente (II) vorzugsweise im Gewichtsverhältnis von Komponente (I) zu Komponente (II) von 98:2 bis 50:50; besonders bevorzugt von 95:5 bis 75:25.

Die Zusammensetzungen der vorliegenden Erfindung können gegebenenfalls weiterhin Additive umfassen.

Als Additive können z.B. Füllstoffe (z. B. Kreide, Talkum), Stabilisatoren (z. B. Ca/Zn bzw. Ba/Zn - Seifen, organische Stabilisatoren, Sn - Stabilisatoren), Costabilisatoren (z. B. epoxidiertes Sojabohnenöl), Antistatika, Flammschutzmittel (z. B. Aluminiumhydroxyd), Gleitmittel (z. B. Innen- und Außengleitmittel), Pigmente (z. B. organische und anorganische Pigmente, TiO₂, Ruß), PVC, VC/VAc-Copolymere, Treibmittel, Antiblockmittel, Strukturierungsmittel, antibakterielle Mittel und Mischungen hiervon enthalten sein.

Die Menge der Additive beträgt dabei bevorzugt 0,1 bis 90 Gew.-%, bezogen auf das Gewicht des Vinylchlorid-Pfropfcopolymers, besonders bevorzugt 2 bis 30 %.

Die erfindungsgemäßen Zusammensetzungen können gegebenenfalls weiterhin Weichmacher (z.B. Monomer- oder Polymerweichmacher) enthalten. Vorzugsweise enthalten die erfindungsgemäßen Zusammensetzungen jedoch keine weiteren Weichmacher.

Bei den erfindungsgemäßen Zusammensetzungen handelt es sich vorzugsweise um Formmassen. Diese Formmassen können zur Herstellung von Formkörpern verwendet werden; vorzugsweise zur Herstellung von flexiblen bis weichen Formkörpern, insbesondere von Flächengebilden.

Die Formmassen der vorliegenden Erfindung lassen sich problemlos auf für PVC üblichen Maschinen verarbeiten und ergeben Formkörper, wie z. B. Folien, Dachbahnen, Planen mit glatter oder geprägter Oberfläche, mit und ohne (Gewebe)Verstärkung und guten mechanischen Eigenschaften. Die Formkörper der vorliegenden Erfindung weisen insbesondere eine hohe Alterungsbeständigkeit auf und sind migrationsfrei.

Bei geeigneter Rezeptierung mit zugelassenen Komponenten können auch Formmassen für den Kontakt mit Lebensmittel wie z. B. Behälterauskleidungen oder Verpackungsfolien, die auch thermoformbar sind oder Schwimmbadfolien hergestellt werden.

Die Formmassen der vorliegenden Erfindung können z.B. wie folgt hergestellt werden:
Zunächst können die Komponenten (I) und (II) sowie gegebenenfalls die zusätzlichen Additive z.B. in einem Mischer (z. B. Fa. Henschel), gemischt und homogenisiert werden.

Danach kann die erhaltene Mischung z.B. auf einem Mischwalzwerk oder im Extruder plastifiziert werden.

Anschließend kann die Mischung z.B. mit einem Kalander zu einer Folie kalandriert oder extrudiert werden.

### Beispiele

**Tabelle 1**

| **Inhaltsstoff* (Handelsname)** | **Vergl. - Bsp.1** | **Bsp. 1** | **Bsp. 2** | **Vergl. - Bsp. 2** | **Bsp. 3** | **Bsp. 4** | **Vergl. - Bsp.3** | **Bsp. 5** | **Bsp. 6** |
|---|---|---|---|---|---|---|---|---|---|
| VK 710 | 100 | 90 | 80 | | | | | | |
| K 707 E | | | | 100 | 90 | 80 | | | |
| K 704 | | | | | | | 100 | 90 | 80 |
| Stabiol CZ 2001/4 | 2,5 | 2,5 | 2,5 | 2,5 | 2,5 | 2,5 | 2,5 | 2,5 | 2,5 |
| Paraloid K 120 N | 1 | 1 | 1 | 1 | 1 | 1 | 1 | 1 | 1 |
| Loxiol G 70 | 0,3 | 0,3 | 0,3 | 0,3 | 0,3 | 0,3 | 0,3 | 0,3 | 0,3 |
| Levamelt 600 | | 10 | 20 | | 10 | 20 | | 10 | 20 |

| | | | | | | | | | |
|---|---|---|---|---|---|---|---|---|---|
| Vinnolit K 707 E, K 704 und VK 710: Vinylchlorid-Pfropfcopolymer; Stabiol: Ca/Zn - Stabilisator; Paraloid K120N: Verarbeitungshilfe; Loxiol G70: Levamelt 600: EVA. | | | | | | | | | |

Die jeweiligen Inhaltsstoffe wurden zunächst in einem Collette Mischer für 10 Minuten bei Raumtemperatur homogenisiert. Danach wurde die Mischung in einem Mischwalzwerk für 6 Minuten bei 165°C plastifiziert. Die anschließende Verarbeitung zu einer Folie mit einer Dicke von 200 µm erfolgte auf einem 4 Walzen Versuchs-Kalander bei 180°C und einer Geschwindigkeit von 2 m/min.

**Tabelle 2**

| **Prüfungen** | **Vergl. - Bsp. 1** | **Bsp. 1** | **Bsp. 2** | **Vergl. - Bsp. 2** | **Bsp. 3** | **Bsp. 4** | **Vergl. - Bsp.3** | **Bsp. 5** | **Bsp. 6** |
|---|---|---|---|---|---|---|---|---|---|
| **Shore Härte A DIN 53505** | 88,2 | 75,6 | 65,8 | 93,1 | 80,9 | 66,4 | 94,2 | 83,3 | 68,1 |
| **Shore Härte D DIN 53505** | 31,9 | 22,1 | 16,8 | 36,6 | 24,6 | 16,9 | 36,1 | 25,4 | 16,8 |
| **Transparenz/ Folie DIN 53147** | 68,11 | 73,12 | 77,57 | 56,15 | 71,8 | 73,23 | 42,68 | 62,8 | 68,13 |
| **Transparenz/Platte DIN 53147** | 32,43 | 36,23 | 45,28 | 20,79 | 42,26 | 44,97 | 11,2 | 29,32 | 44,71 |

| **Viskositätₐₚ Pa*s Schergeschw.ₐₚ 1/S** | | | | | | | | | |
|---|---|---|---|---|---|---|---|---|---|
| HKV bei 10 | 24166 | 14504 | 10088 | 17099 | 11855 | 8378 | 16244 | 11285 | 8663 |
| HKV bei 100 | 3360 | 2514 | 2043 | 2679 | 2149 | 1847 | 2599 | 2092 | 1767 |
| HKV bei 1000 | 471 | 388 | 352 | 401 | 375 | 350 | 385 | 370 | 343 |
| **Zugeigenschaften DIN EN ISO 527 1-3 Reißfestigkeit MPa** | 18,4 | 15,5 | 12,5 | 16,8 | 14,1 | 11,6 | 16,5 | 13,9 | 11,3 |
| **Zugeigenschaften DIN EN ISO 527 1-3 Reißdehnung %** | 233,3 | 278,5 | 320,3 | 189,5 | 229,5 | 270,6 | 216,1 | 274 | 335 |

Die Shore Härte der Pfropfcopolymere ist mit ca. A 90 für viele Anwendungen zu hoch. Durch eine Abmischung mit einem EVA konnte diese entscheidend gesenkt und auch sehr weiche Formmassen mit Shore A 65 erzielt werden. Darüber hinaus zeigte sich eine signifikante Verbesserung der Transparenz.

Für die Verarbeitung im Spritzguss - Verfahren ist die Viskosität eine wichtige Kenngröße. Durch das EVA konnte die Fließfähigkeit der Formmasse entscheidend verbessert werden.

## Patentansprüche

1. Zusammensetzung enthaltend die folgenden Komponenten (I) und (II):
(I) ein Vinylchlorid-Pfropfcopolymer enthaltend:
A) 35 bis 60 Gew.-%, bezogen auf das Gesamtgewicht des Vinylchlorid-Pfropfcopolymers, eines aufgepfropften, vernetzten Copolymers, herstellbar durch Copolymerisation von:
80 bis 99.95 Gew.-% Vinylchlorid,
0.05 bis 3.0 Gew.-% mehrfach ethylenisch ungesättigten Comonomeren sowie
0 bis 19.95 Gew.-% weiteren copolymerisierbaren, ethylenisch ungesättigten Comonomeren,
oder
35 bis 60 Gew.-%, bezogen auf das Gesamtgewicht des Vinylchlorid-Pfropfcopolymers, eines aufgepfropften (Co)polymers, herstellbar durch (Co)polymerisation von
80 bis 100 Gew.-% Vinylchlorid sowie
0 bis 20 Gew.-% weiteren copolymerisierbaren, ethylenisch ungesättigten Comonomeren, bei einer Polymerisationstemperatur von 30 bis 85°C,
und
B) 40 bis 65 Gew.-%, bezogen auf das Gesamtgewicht des Vinylchlorid-Pfropfcopolymers, einer vernetzten Pfropfgrundlage enthaltend
ein vernetztes Acrylsäureester-Copolymer mit 0.01 bis 5 Gew.-% mehrfach ethylenisch ungesättigten Comonomer-Einheiten sowie gegebenenfalls weiteren mit Acrylsäureestern copolymerisierbaren Comonomer-Einheiten; und
(II) ein Ethylen-Vinylacetat-Copolymer mit einem Vinylacetat-Anteil von 38 bis 92 Gew.-%.

2. Zusammensetzung nach Anspruch 1, wobei die mehrfach ethylenisch ungesättigten Comonomere keine konjugierten Doppelbindungen aufweisen, wie beispielsweise Divinylester von Dicarbonsäuren wie Divinyladipat; Diallylester von Polycarbonsäuren wie Diallylphthalat, Diallylfumarat; Divinylether von mehrwertigen Alkoholen wie Ethylenglykoldivinylether; Divinylaromaten wie Divinylbenzol; Allyl- und Methallylester von ethylenisch ungesättigten Monocarbonsäuren wie Allylmethacrylat; Di- und Triacrylate von mehrwertigen Alkoholen wie Ethylenglykoldimethacrylat, Propylenglykoldimethacrylat, Diethylenglykoldiacrylat (DEGDA), Diethylenglykoldimethacrylat (DEGDMA), Trimethylenglykoldiacrylat, Butylenglykoldiacrylat, Pentamethylenglykoldiacrylat, Glyceryltriacrylat, Trimethylolpropantriacrylat (TMPTA), Trimethyolpropantrimethacrylat (TMPTMA); Tetraacrylate mehrwertiger Alkohole wie Pentaerythrittetraacrylat; Triallylcyanurat.

3. Zusammensetzung nach Anspruch 1, wobei die mehrfach ethylenisch ungesättigten Comonomere ausgewählt werden aus Diallylphthalat, Divinyladipat, Triallylcyanurat, Allylmethacrylat, Ethylenglykoldimethacrylat, Butylenglykoldiacrylat, Trimethylenglykoldiacrylat und Trimethyolpropantriacrylat oder deren Gemische.

4. Zusammensetzung nach einem der vorhergehenden Ansprüche, wobei die weiteren copolymerisierbaren, ethylenisch ungesättigten Comonomere ausgewählt werden aus: Vinylestern von gesättigten Carbonsäuren mit 2 bis 12 C-Atomen wie Vinylacetat, Vinylpropionat, Vinyllaurat oder Versaticsäurevinylester; (Meth)acrylsäureestern von Alkoholen mit 1 bis 8 C-Atomen, wie Methylacrylat, Methylmethacrylat, n-Butylacrylat, n-Butylmethacrylat, t-Butylacrylat, 2-Ethylhexylacrylat; Glycidylmethacrylat, ethylenisch ungesättigten Mono- und Dicarbonsäuren wie Acrylsäure, Methacrylsäure, Maleinsäure, Fumarsäure; Mono- und Diestern von ethylenisch ungesättigten Dicarbonsäuren wie Diisopropylfumarat; Vinylaromaten wie Styrol; und Olefinen wie Ethylen.

5. Zusammensetzung nach einem der vorhergehenden Ansprüche, wobei das vernetzte Acrylsäureester-Copolymer aus einem oder mehreren Acrylsäureestern von Alkoholen mit 1 bis 12 C-Atomen, wie beispielsweise Methylacrylat, Ethylacrylat, Propylacrylat, n-Butylacrylat, 2-Ethylhexylacrylat hergestellt wurde.

6. Zusammensetzung nach Anspruch 1, enthaltend als Komponente (I):
A) 40 bis 55 Gew.-%, bezogen auf das Gesamtgewicht des Pfropfcopolymers, eines aufgepfropften, vernetzten Copolymers aus
98.5 bis 99.9 Gew.-% Vinylchlorid sowie
0.1 bis 1.5 Gew.-% eines oder mehrerer mehrfach ethylenisch ungesättigter Comonomere aus der Gruppe Diallylphthalat, Allylmethacrylat, Ethylenglykoldimethacrylat, Butylenglykoldiacrylat, Trimethylenglykoldiacrylat, Trimethyolpropantriacrylat,
oder
40 bis 55 Gew.-%, bezogen auf das Gesamtgewicht des Vinylchlorid-Pfropfcopolymers, eines aufgepfropften VC-Polymers, herstellbar durch Pfropfpolymerisation von Vinylchlorid bei einer Polymerisationstemperatur von 30 bis 85°C, und
B) 45 bis 60 Gew.-%, bezogen auf das Gesamtgewicht des Pfropfcopolymers, einer vernetzten Pfropfgrundlage bestehend aus einem vernetzten Copolymer von n-Butylacrylat und/oder 2-Ethylhexylacrylat, oder aus einem vernetzten Acrylsäureester-Ethylen-Vinylacetat-Copolymer mit einem Acrylat-Gehalt von 35 bis 70 Gew.-% oder Gemischen der genannten Copolymere, wobei die Copolymere mit 0.05 bis 0.5 Gew.-% eines oder mehrerer copolymerisierten, mehrfach ethylenisch ungesättigten Comonomeren aus der Gruppe Diallylphthalat, Allylmethacrylat, Ethylenglykoldimethacrylat, Butylenglykoldiacrylat, Trimethylenglykoldiacrylat, Trimethyolpropantriacrylat vernetzt sind.

7. Zusammensetzung nach einem der Ansprüche 1 bis 6, wobei Komponente (II) ein Ethylen-Vinylacetat-Copolymer mit einem Vinylacetat-Anteil von 43 bis 75 Gew.-% ist.

8. Zusammensetzung nach einem der Ansprüche 1 bis 6, wobei Komponente (II) ein Ethylen-Vinylacetat-Copolymer mit einem Vinylacetat-Anteil von 48 bis 72 Gew.-% ist.

9. Zusammensetzung nach einem der Ansprüche 1 bis 8, das Komponente (I) und Komponente (II) im Gewichtsverhältnis von 98:2 bis 50:50 enthält.

10. Zusammensetzung nach einem der Ansprüche 1 bis 8, das Komponente (I) und Komponente (II) im Gewichtsverhältnis von 95:5 bis 75:25 enthält.

11. Zusammensetzung nach einem der Ansprüche 1 bis 10, das weiterhin 0,1 bis 90 Gew.-%, bezogen auf das Gewicht des Vinylchlorid-Pfropfcopolymers, Additive enthält.

12. Zusammensetzung nach Anspruch 11, wobei die Additive ausgewählt sind aus Füllstoffen, Stabilisatoren, Costabilisatoren, Antistatika, Flammschutzmitteln, Gleitmitteln, Pigmenten, Polyvinylchlorid, Treibmitteln, Vinylchlorid/Vinylacetat-Copolymeren, Antiblockmitteln, Strukturierungsmitteln, antibakteriellen Mitteln und Mischungen davon.

13. Verwendung einer Zusammensetzung nach einem der Ansprüche 1 bis 12 als Formmasse zur Herstellung von Formkörpern; vorzugsweise zur Herstellung von flexiblen bis weichen Formkörpern, insbesondere von Flächengebilden wie z. B. Folien, Dachbahnen, Behälterauskleidungen, Schwimmbadfolien, Planen und Verpackungsfolien.

## Claims

1. Composition comprising the following components (I) and (II):
(I) a vinyl chloride graft copolymer comprising:
A 35 to 60% by weight, based on the total weight of the vinyl chloride graft copolymer, of a grafted, crosslinked copolymer, obtainable by copolymerisation of:
80 to 99.95% by weight of vinyl chloride,
0.05 to 3.0% by weight of ethylenically polyunsaturated comonomers, and
0 to 19.95% by weight of further copolymerisable ethylenically unsaturated comonomers,
or
35 to 60 % by weight, based on the total weight of the vinyl chloride graft copolymer, of a grafted (co)polymer obtainable by (co)polymerisation of
80 to 100 % by weight vinyl chloride and
0 to 20 % by weight of other copolymerisable, ethylenically unsaturated comonomers, at a polymerisation temperature of 30 to 85 °C,
and
B) 40 to 65 % by weight, based on the total weight of the vinyl chloride graft copolymer, of a crosslinked graft base containing
a crosslinked acrylic acid ester copolymer containing 0.01 to 5 % by weight of ethylenically polyunsaturated comonomer units and optionally further comonomer units copolymerisable with acrylic acid esters; and
(II) an ethylene-vinyl acetate copolymer with a vinyl acetate content of 38 to 92 % by weight.

2. Composition according to claim 1, wherein the ethylenically polyunsaturated comonomers have no conjugated double bonds, for example divinyl esters of dicarboxylic acids such as divinyl adipate; diallyl esters of polycarboxylic acids such as diallyl phthalate, diallyl fumarate; divinyl ethers of polyhydric alcohols such as ethylene glycol divinyl ether; divinyl aromatics such as divinylbenzene; allyl and methallyl esters of ethylenically unsaturated monocarboxylic acids such as allyl methacrylate; di- and triacrylates of polyhydric alcohols such as ethylene glycol dimethacrylate, propylene glycol dimethacrylate, diethylene glycol diacrylate (DEGDA), diethylene glycol dimethacrylate (DEGDMA), trimethylene glycol diacrylate, butylene glycol diacrylate, pentamethylene glycol diacrylate, glyceryl triacrylate, trimethylolpropane triacrylate (TMPTA), trimethylolpropane trimethacrylate (TMPTMA); Tetraacrylates of polyhydric alcohols such as pentaerythritol tetraacrylate; Triallyl cyanurate.

3. Composition according to claim 1, wherein the ethylenically polyunsaturated comonomers are selected from diallyl phthalate, divinyl adipate, triallyl cyanurate, allyl methacrylate, ethylene glycol dimethacrylate, butylene glycol diacrylate, trimethylene glycol diacrylate and trimethylolpropane triacrylate or mixtures thereof.

4. Composition according to one of the preceding claims, wherein the further copolymerisable ethylenically unsaturated comonomers are selected from: vinyl esters of saturated carboxylic acids having 2 to 12 carbon atoms, such as vinyl acetate, vinyl propionate, vinyl laurate or vinyl ester of versatic acid; (meth)acrylic acid esters of alcohols with 1 to 8 carbon atoms, such as methyl acrylate, methyl methacrylate, n-butyl acrylate, n-butyl methacrylate, t-butyl acrylate, 2-ethylhexyl acrylate; glycidyl methacrylate, ethylenically unsaturated mono- and dicarboxylic acids such as acrylic acid, methacrylic acid, maleic acid, fumaric acid; mono- and diesters of ethylenically unsaturated dicarboxylic acids such as diisopropyl fumarate; vinyl aromatics such as styrene; and olefins such as ethylene.

5. Composition according to one of the preceding claims, wherein the cross-linked acrylic acid ester copolymer was manufactured from one or more acrylic acid esters of alcohols having 1 to 12 carbon atoms, such as methyl acrylate, ethyl acrylate, propyl acrylate, n-butyl acrylate, 2-ethylhexyl acrylate.

6. Composition according to claim 1, containing as component (I):
A) 40 to 55 % by weight, based on the total weight of the graft copolymer, of a grafted, crosslinked copolymer comprising
98.5 to 99.9 % by weight of vinyl chloride and
0.1 to 1.5 % by weight of one or more ethylenically polyunsaturated comonomers from the group consisting of diallyl phthalate, allyl methacrylate, ethylene glycol dimethacrylate, butylene glycol diacrylate, trimethylene glycol diacrylate, trimethylolpropane triacrylate,
or
40 to 55 % by weight, based on the total weight of the vinyl chloride graft copolymer, of a grafted VC polymer obtainable by graft polymerisation of vinyl chloride at a polymerisation temperature of 30 to 85 °C, and
B) 45 to 60 % by weight, based on the total weight of the graft copolymer, of a crosslinked graft base consisting of a crosslinked copolymer of n-butyl acrylate and/or 2-ethylhexyl acrylate, or of a crosslinked acrylic acid ester-ethylene-vinyl acetate copolymer with an acrylate content of 35 to 70 % by weight, or mixtures of the aforementioned copolymers, wherein the copolymers are crosslinked with 0.05 to 0.5 % by weight of one or more copolymerised, ethylenically polyunsaturated comonomers from the group consisting of diallyl phthalate, allyl methacrylate, ethylene glycol dimethacrylate, butylene glycol diacrylate, trimethylene glycol diacrylate, trimethylolpropane triacrylate.

7. Composition according to one of claims 1 to 6, wherein component (II) is an ethylene-vinyl acetate copolymer having a vinyl acetate content of 43 to 75 % by weight.

8. Composition according to one of claims 1 to 6, wherein component (II) is an ethylene-vinyl acetate copolymer with a vinyl acetate content of 48 to 72 % by weight.

9. Composition according to one of claims 1 to 8, containing component (I) and component (II) in a weight ratio of 98:2 to 50:50.

10. Composition according to one of claims 1 to 8, containing component (I) and component (II) in a weight ratio of 95:5 to 75:25.

11. Composition according to one of claims 1 to 10 further comprising 0.1 to 90 % by weight additives based on the weight of the vinyl chloride graft copolymer.

12. Composition according to claim 11, wherein the additives are selected from fillers, stabilisers, co-stabilisers, antistatic agents, flame retardants, lubricants, pigments, polyvinyl chloride, blowing agents, vinyl chloride/vinyl acetate copolymers, anti-blocking agents, structuring agents, antibacterial agents and mixtures thereof.

13. Use of a composition according to any of claims 1 to 12 as a moulding compound for the production of moulded articles; preferably for the production of flexible to soft moulded articles, in particular flat structures such as films, roofing membranes, container linings, swimming pool films, tarpaulins and packaging films.

## Revendications

1. Composition comprenant les composants (I) et (II) suivants:
(I) un copolymère greffé de chlorure de vinyle contenant:
A) 35 à 60 % en poids, par rapport au poids total du copolymère greffé de chlorure de vinyle, d'un copolymère réticulé greffé, pouvant être préparé par copolymérisation de:
80 à 99,95 % en poids de chlorure de vinyle,
0,05 à 3,0 % en poids de comonomères à insaturation éthylénique multiple, ainsi que
0 à 19,95 % en poids d'autres comonomères copolymérisables à insaturation éthylénique,
ou
35 à 60 % en poids, par rapport au poids total du copolymère greffé de chlorure de vinyle, d'un (co)polymère greffé, pouvant être préparé par (co)polymérisation de
80 à 100 % en poids de chlorure de vinyle et
0 à 20 % en poids d'autres comonomères copolymérisables à insaturation éthylénique, à une température de polymérisation de 30 à 85 °C,
et
B) 40 à 65 % en poids, par rapport au poids total du copolymère greffé de chlorure de vinyle, d'une base de greffage réticulée contenant
un copolymère d'ester d'acide acrylique réticulé avec 0,01 à 5 % en poids d'unités comonomères à insaturation éthylénique multiple ainsi que, le cas échéant, d'autres unités comonomères copolymérisables avec des esters d'acide acrylique; et
(II) un copolymère d'éthylène-acétate de vinyle ayant une teneur en acétate de vinyle de 38 à 92 % en poids.

2. Composition selon la revendication 1, dans laquelle les comonomères à insaturation éthylénique multiple ne présentent pas de doubles liaisons conjuguées, comme par exemple des esters divinyliques d'acides dicarboxyliques tels que l'adipate de divinyle; des esters diallyliques d'acides polycarboxyliques tels que le phtalate de diallyle, le fumarate de diallyle; des éthers divinyliques d'alcools polyvalents tels que l'éther divinylique d'éthylèneglycol; les composés divinylaromatiques tels que le divinylbenzène; les esters allyliques et méthallyliques d'acides monocarboxyliques à insaturation éthylénique tels que le méthacrylate d'allyle; les di- et triacrylates d'alcools polyvalents tels que le diméthacrylate d'éthylèneglycol, le diméthacrylate de propylèneglycol, le diacrylate de diéthylèneglycol (DEGDA), diméthacrylate de diéthylèneglycol (DEGDMA), diacrylate de triméthylèneglycol, diacrylate de butylèneglycol, diacrylate de pentaméthylèneglycol, triacrylate de glycéryle, triacrylate de triméthylolpropane (TMPTA), triméthacrylate de triméthylolpropane (TMPTMA); Tétraacrylates d'alcools polyvalents tels que le tétraacrylate de pentaérythritol; Cyanurate de triallyle.

3. Composition selon la revendication 1, dans laquelle les comonomères à insaturation éthylénique multiple sont choisis parmi le phtalate de diallyle, l'adipate de divinyle, le cyanurate de triallyle, le méthacrylate d'allyle, le diméthacrylate d'éthylèneglycol, le diacrylate de butylèneglycol, diacrylate de triméthylèneglycol et le triacrylate de triméthylolpropane ou leurs mélanges.

4. Composition selon l'une des revendications précédentes, dans laquelle les autres comonomères copolymérisables à insaturation éthylénique sont choisis parmi: les esters vinyliques d'acides carboxyliques saturés comportant 2 à 12 atomes de carbone, tels que l'acétate de vinyle, le propionate de vinyle, le laurate de vinyle ou l'ester vinylique de l'acide versatique; les esters (méth)acryliques d'alcools comportant 1 à 8 atomes de carbone, tels que l'acrylate de méthyle, le méthacrylate de méthyle, l'acrylate de n-butyle, le méthacrylate de n-butyle, l'acrylate de t-butyle, l'acrylate de 2-éthylhexyle; méthacrylate de glycidyle, les acides mono- et dicarboxyliques à insaturation éthylénique tels que l'acide acrylique, l'acide méthacrylique, l'acide maléique, l'acide fumarique; mono- et diesters d'acides dicarboxyliques à insaturation éthylénique tels que le fumarate de diisopropyle; composés vinylaromatiques tels que le styrène; et oléfines telles que l'éthylène.

5. Composition selon l'une des revendications précédentes, dans laquelle le copolymère d'ester d'acide acrylique réticulé a été préparé à partir d'un ou plusieurs esters d'acide acrylique d'alcools ayant 1 à 12 atomes de carbone, tels que l'acrylate de méthyle, l'acrylate d'éthyle, l'acrylate de propyle, l'acrylate de n-butyle, l'acrylate de 2-éthylhexyle.

6. Composition selon la revendication 1, contenant comme composant (I):
A) 40 à 55 % en poids, par rapport au poids total du copolymère greffé, d'un copolymère réticulé greffé constitué de
98,5 à 99,9 % en poids de chlorure de vinyle et
0,1 à 1,5 % en poids d'un ou plusieurs comonomères à insaturation éthylénique multiple choisis dans le groupe constitué par le phtalate de diallyle, le méthacrylate d'allyle, le diméthacrylate d'éthylèneglycol, le diacrylate de butylèneglycol, le diacrylate de triméthylèneglycol, le triacrylate de triméthyolpropane,
ou
40 à 55 % en poids, par rapport au poids total du copolymère greffé de chlorure de vinyle, d'un polymère VC greffé, pouvant être préparé par polymérisation par greffage de chlorure de vinyle à une température de polymérisation de 30 à 85 °C, et
B) 45 à 60 % en poids, par rapport au poids total du copolymère greffé, d'une base de greffage réticulée constituée d'un copolymère réticulé d'acrylate de n-butyle et/ou d'acrylate de 2-éthylhexyle, ou d'un copolymère réticulé d'ester d'acide acrylique-éthylène-acétate de vinyle ayant une teneur en acrylate de 35 à 70 % en poids, ou de mélanges des copolymères mentionnés, les copolymères étant réticulés avec 0,05 à 0,5 % en poids d'un ou plusieurs comonomères copolymérisés à insaturation éthylénique multiple choisis dans le groupe constitué par le phtalate de diallyle, le méthacrylate d'allyle, le diméthacrylate d'éthylèneglycol, le diacrylate de butylèneglycol, diacrylate de triméthylèneglycol, le triacrylate de triméthylolpropane.

7. Composition selon l'une des revendications 1 à 6, dans laquelle le composant (II) est un copolymère d'éthylène-acétate de vinyle ayant une teneur en acétate de vinyle de 43 à 75 % en poids.

8. Composition selon l'une des revendications 1 à 6, dans laquelle le composant (II) est un copolymère d'éthylène-acétate de vinyle ayant une teneur en acétate de vinyle de 48 à 72 % en poids.

9. Composition selon l'une des revendications 1 à 8, qui contient le composant (I) et le composant (II) dans un rapport pondéral de 98:2 à 50:50.

10. Composition selon l'une des revendications 1 à 8, qui contient le composant (I) et le composant (II) dans un rapport pondéral de 95:5 à 75:25.

11. Composition selon l'une des revendications 1 à 10, qui contient en outre 0,1 à 90 % en poids, par rapport au poids du copolymère greffé de chlorure de vinyle, d'additifs.

12. Composition selon la revendication 11, dans laquelle les additifs sont choisis parmi les charges, les stabilisants, les co-stabilisants, les agents antistatiques, les retardateurs de flamme, les lubrifiants, les pigments, le chlorure de polyvinyle, les agents gonflants, les copolymères de chlorure de vinyle/acétate de vinyle, les agents anti-blocage, les agents structurants, les agents antibactériens et leurs mélanges.

13. Utilisation d'une composition selon l'une des revendications 1 à 12 comme masse de moulage pour la fabrication de pièces moulées; de préférence pour la fabrication de pièces moulées souples à molles, en particulier de structures planes telles que des films, des membranes de toiture, des revêtements de conteneurs, des films pour piscines, des bâches et des films d'emballage.
